# EUROPÄISCHE PATENTANMELDUNG

(11) **EP 2 693 733 A1**
(43) Veröffentlichungstag der Anmeldung: **05.02.2014**
(21) Anmeldenummer: 12005692.4
(22) Anmeldetag: 04.08.2012
(51) Int. Cl.: H04N 1/405, E04B 9/04, B26F 1/00

(54) **Verfahren zur Übertragung einer Bildvorlage auf eine Abbildungsfläche**

(71) Anmelder: Eichhorn GmbH & Co. KG, 63607 Wächtersbach (DE)
(72) Erfinder: Eichhorn, Adrian, 63607 Wächtersbach (DE)
(74) Vertreter: Oppermann, Ewald

(57) **Zusammenfassung**

Vorgeschlagen wird ein Verfahren zur Übertragung einer Bildvorlage auf eine Abbildungsfläche einer Trägerplatte. Die Bildvorlage wird auf der Grundlage eines einheitlichen Punktrasters in einem Digitalisierungsschritt in eine Vielzahl von Pixeln mit den Grautönen der Bildvorlage entsprechenden Grautonabstufungen zerlegt. Die Bohrlöcher werden dann auf dem Punktraster in die Trägerplatte eingebracht, wodurch die Bildvorlage mittels einer Vielzahl von kreisrunden Bohrlöchern mit unterschiedlichen Durchmessern erkennbar auf der Abbildungsfläche als Perforationsbild wiedergegeben wird.

## Beschreibung

### TECHNISCHES GEBIET

Die Erfindung bezieht sich auf ein Verfahren zur Übertragung einer Bildvorlage auf eine Abbildungsfläche einer Trägerplatte. Als Trägerplatte können unterschiedliche Materialien, wie z.B. Spanplatten, MDF-Platten, Gipskarton, Gipskarton- oder Gipsfaserplatten sowie andere mineralische Werkstoffe, Glas oder Kunststoffe etc. zum Einsatz gelangen, wie sie beispielsweise für akustisch wirksame oder auch nur dekorative Wand- und Deckenverkleidungen, für Trennwände und für Möbelkomponenten verwendet werden.

### STAND DER TECHNIK

Bekannt sind bereits akustisch wirksame Platten für den Innenausbau, die mit Lochmustern, Logos und Ähnlichem versehen sind. Auch akustisch wirksame Wandbilder sind bereits bekannt, bei denen mit fotografischen oder anderen Motiven bedruckte Oberflächen mit schalldämpfenden Lochungen versehen sind.

### AUFGABENSTELLUNG

Der vorliegenden Erfindung liegt die Aufgabe zugrunde, ein Verfahren der eingangs beschriebenen Art bereitzustellen, mit dessen Hilfe fotografische, künstlerische oder andere durch bildgebende Darstellungsverfahren (Röntgen, Radar, Infrarot, Thermografie u.a.) erzeugte Motive ohne Verwendung von Linien auf Abbildungsflächen von Trägerplatten mit und ohne akustische Wirksamkeit wiedererkennbar dargestellt sind.

### DARSTELLUNG DER ERFINDUNG

Die gestellte Aufgabe wird erfindungsgemäß durch das im Anspruch 1 angegebene Verfahren gelöst. Das erfindungsgemäße Verfahren ist durch die Schritte gekennzeichnet,
dass die Bildvorlage auf der Grundlage eines einheitlichen Punktrasters in einem Digitalisierungsschritt in eine Vielzahl von Pixeln mit den Grautönen der Bildvorlage entsprechenden Grautonabstufungen zerlegt wird, wobei Grau hier eine beispielhafte Farbwahl darstellt,
dass den einzelnen Grautonabstufungen jeweils ein bestimmter Bohrlochdurchmesser zugeordnet wird, der in Richtung dunkler Grautöne zunimmt, und
dass die Bohrlöcher auf dem Punktraster in die Trägerplatte eingebracht werden, so
dass die Bildvorlage mittels einer Vielzahl von kreisrunden Bohrlöchern mit unterschiedlichen Durchmessern erkennbar auf der Abbildungsfläche als Perforationsbild wiedergegeben wird.

Das erfindungsgemäße Verfahren wird hierin unter Verwendung der dafür bevorzugten kreisrunden Bohrlöcher beschrieben und dargestellt, jedoch sind im Rahmen der Erfindung auch andere Lochformen mit vergleichbaren Bildwiedergabeergebnissen einsetzbar. So können die Lochöffnungen zum Beispiel mehreckig, schlitz- oder sternförmig sein. In diesem Fall werden die Löcher nicht gebohrt, sondern mit Hilfe von Stanzvorgängen erzeugt.

Für die Erzeugung von Bildern auf der Abbildungsfläche, die einen hohen Wiedererkennungswert haben, sind nicht zahlreiche unterschiedliche Bohrlochdurchmesser erforderlich. Wie im Anspruch 2 angegeben ist reicht es in der bevorzugten Ausführungsform des Verfahrens aus, wenn drei unterschiedliche Durchmesser zur Anwendung gelangen, denen drei in der Bildvorlage vorherrschende Grautöne zugeordnet sind. Grundsätzlich ist die Anzahl der gewählten Lochdurchmesser jedoch beliebig.

Wenn auf der Bildvorlage helle Partien und/oder Lichtreflexe vorhanden sind, können gemäß Anspruch 3 derartige Zonen vollständig von Bohrlöchern frei gehalten werden, wodurch eine besonders plastische Bildwirkung des Perforationsbildes erzielbar ist.

### KURZE BESCHREIBUNG DER BILDER UND ZEICHNUNGEN

Die Erfindung ist in einem Ausführungsbeispiel in den beigefügten Bildern/Zeichnungen dargestellt. Darin zeigt:
- Fig. 1: ein schwarz-weiß Portraitfoto "Marilyn", welches die Bildvorlage für das davon anzufertigende Perforationsbild darstellt,
- Fig. 2: ein von dem Portraitfoto "Marilyn" unter Einsatz des erfindungsgemäßen Verfahrens erzeugtes Perforationsbild,
- Fig. 3: die aus dem Perforationsbild gemäß Fig. 2 vergrößert dargestellte Zone um das linke Auge und
- Fig. 4: den abgebrochen dargestellten Schnitt durch das Perforationsbild und durch das Beispiel einer Trägerplatte entsprechend der Schnittverlaufslinie IV-IV in Fig. 3.

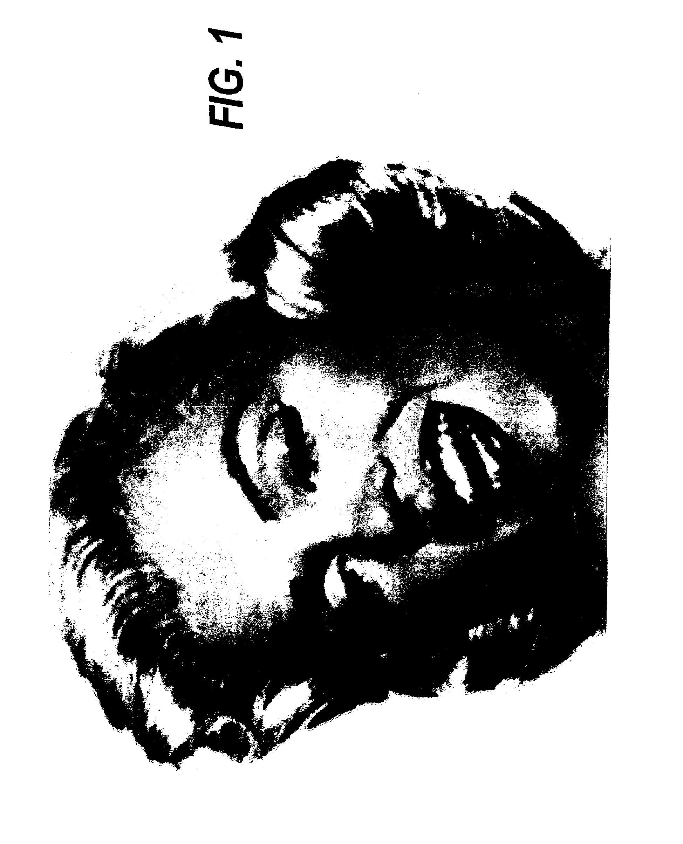

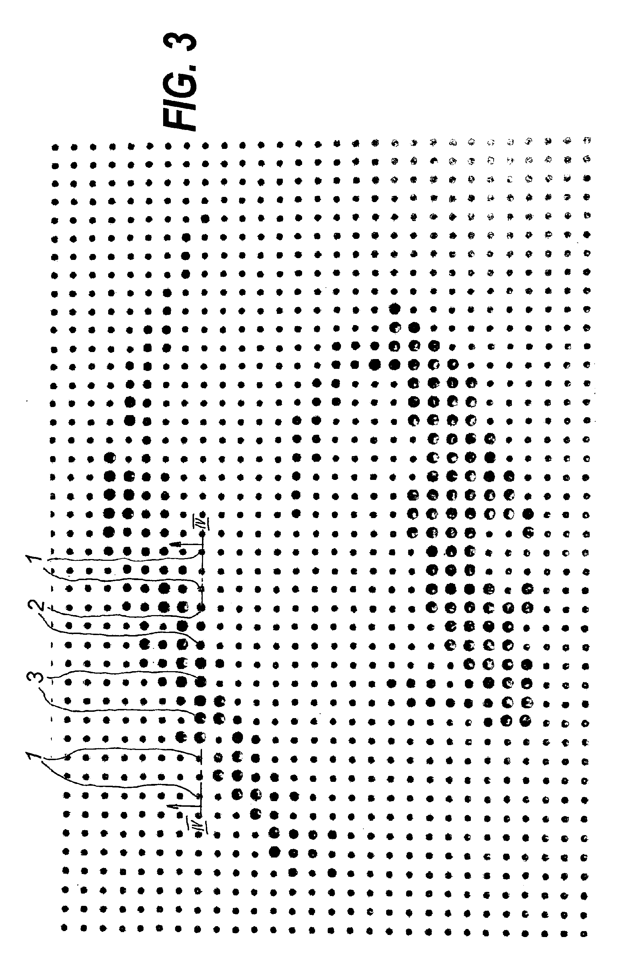

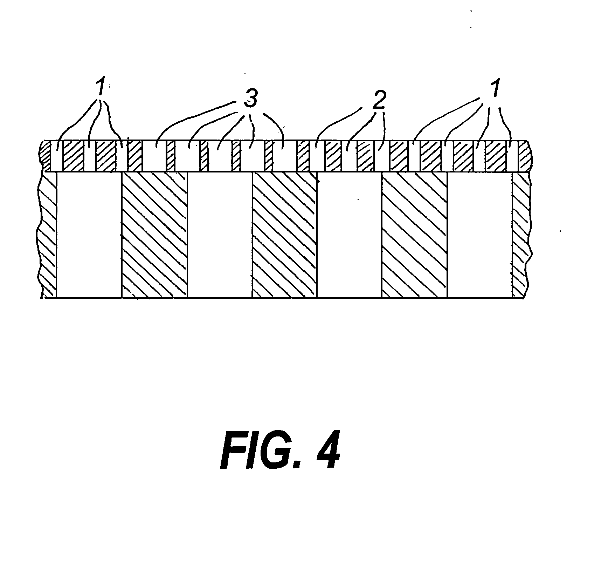

Wie insbesondere aus Fig. 3 und Fig. 4 zu entnehmen ist, wurden für die Wiedergabe der Bildvorlage gemäß Fig. 1 als Perforationsbild gemäß Fig. 3 nur drei unterschiedliche Bohrlochdurchmesser verwendet, nämlich für die hellen Grautöne die Bohrlöcher 1 mit dem kleinsten Durchmesser, für die mittleren Grautöne die Bohrlöcher 2 mit einem größeren Durchmesser und für die dunklen Grautöne die Bohrlöcher 3 mit dem größten Durchmesser.

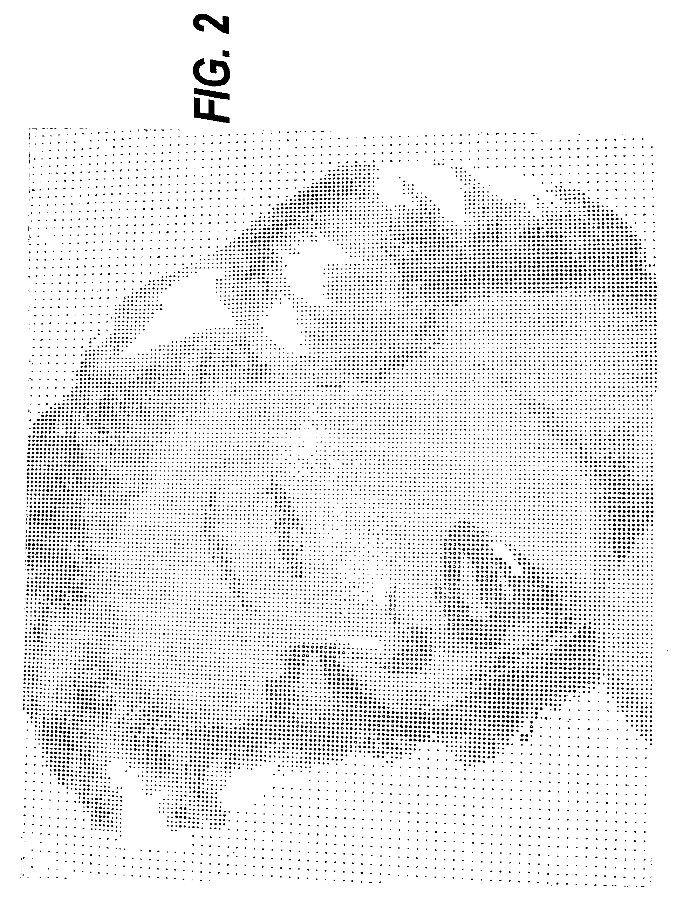

Für die computergestützte Übertragung der Bildvorlage gemäß Fig. 1 zu dem Perforationsbild gemäß Fig. 2 werden den Bohrlöchern, d. h. den drei verschiedenen Grauabstufungen, unterschiedliche Farbtöne mittels bekannter Fotobearbeitungsprogramme zugeordnet. Für die kleinsten Bohrlöcher 1 kann die Farbe gelb verwendet werden, für die größeren Bohrlöcher 2 die Farbe rot und für die größten Bohrlöcher die Farbe blau. Ggf. kann eine Nachillustration für harmonische Bildwirkung, Plastizität und Brillanz erfolgen.

Über das Bild wird ein Grundraster für die Perforation gelegt. Ein geeignetes Software-Programm liest zeilenweise Pixel für Pixel und weist jedem Rasterpunkt die entsprechende Farbe zu. So entsteht ein mehrfarbiges Bild, wobei die Farbflächen in Bezug zum einheitlichen Punktraster genau definiert sind.

Diese Datei wird als eine Folge von definierten Punkten in der für AutoCAD lesbaren Programmiersprache lisp gespeichert. Das Ergebnis sind mehrere Dateien mit verschiedenen Layern. Diese Dateien werden in das AutoCAD eingespeist, wodurch eine für die Bohranlage lesbare Bohrvorlage entsteht.

Die Bearbeitung durch die Bohranlage erfolgt dann den drei Bohrdurchmessern entsprechend in drei Arbeitsgängen, wodurch das Perforationsbild gemäß Fig. 2 entsteht.

Das erfindungsgemäße Verfahren eignet sich gleichermaßen zur Herstellung von bildähnlichen Einzelelementen als auch für komplette Wand- oder Deckenverkleidungen als Bildabwicklung. So können Wand- und Deckenverkleidungen, Trennwände, Möbelkomponenten und Sonderbauteile, jeweils akustisch wirksam oder nur dekorativ wirkend hergestellt werden.

Erfindungsgemäß hergestellte Perforationsbilder können in unterschiedlichen Oberflächen wie in Schichtstoffen, Lacken, Furnieren, Metallen und Folien erzeugt werden. Dabei können für die Trägerplatte als auch für das Verbundelement Brandschutzanforderungen erfüllt werden.

Erfindungsgemäß hergestellte Perforationsbilder können auch Ergänzungen durch dekorative Elemente, wie z.B. durch Schmucksteine, Kristalle u. dgl. erfahren. Auch Kombinationen mit Leuchtmitteln sind möglich, nämlich durch Hinterleuchtung, LED-Elemente oder lichtleitende Glasfasern in einzelnen Bohrlöchern.

Erfindungsgemäß erzeugte Perforationsbilder sind auch an Kühl- und Heizelementen einsetzbar, auch in Kombination mit akustischer Wirksamkeit als sogenannte multifunktionale Elemente.

Vorgeschlagen wird ein Verfahren zur Übertragung einer Bildvorlage auf eine Abbildungsfläche einer Trägerplatte. Die Bildvorlage wird auf der Grundlage eines einheitlichen Punktrasters in einem Digitalisierungsschritt in eine Vielzahl von Pixeln mit den Grautönen der Bildvorlage entsprechenden Grautonabstufungen zerlegt. Die Bohrlöcher werden dann auf dem Punktraster in die Trägerplatte eingebracht, wodurch die Bildvorlage mittels einer Vielzahl von kreisrunden Bohrlöchern mit unterschiedlichen Durchmessern erkennbar auf der Abbildungsfläche als Perforationsbild wiedergegeben wird.

## Patentansprüche

1. Verfahren zur Übertragung einer Bildvorlage auf eine Abbildungsfläche einer Trägerplatte, **gekennzeichnet durch** die Schritte,
dass die Bildvorlage auf der Grundlage eines einheitlichen Punktrasters in einem Digitalisierungsschritt in eine Vielzahl von Pixeln mit den Grautönen der Bildvorlage entsprechenden Grautonabstufungen zerlegt wird,
dass den einzelnen Grautonabstufungen jeweils ein bestimmter Bohrlochdurchmesser zugeordnet wird, der in Richtung dunkler Grautöne zunimmt, und
dass die Bohrlöcher auf dem Punktraster in die Trägerplatte eingebracht werden, so
dass die Bildvorlage mittels einer Vielzahl von kreisrunden Bohrlöchern mit unterschiedlichen Durchmessern erkennbar auf der Abbildungsfläche als Perforationsbild wiedergegeben wird.

2. Verfahren nach Anspruch 1, **dadurch gekennzeichnet, dass** für die Bohrlöcher drei unterschiedliche Durchmesser zur Anwendung gelangen, denen drei in der Bildvorlage vorherrschende Grautöne zugeordnet sind.

3. Verfahren nach den Ansprüchen 1 und 2, **dadurch gekennzeichnet, dass** ausgewählte Zonen der Bildvorlage von Bohrlöchern frei gehalten werden.
